# EUROPEAN PATENT APPLICATION

(11) **EP 4 191 512 A1**
(43) Date of publication of application: **07.06.2023**
(21) Application number: 21851484.2
(22) Date of filing: 21.07.2021
(51) Int. Cl.: G06T 1/00, H04N 1/60

(54) **IMAGE OUTPUT DEVICE, IMAGE OUTPUT METHOD, IMAGE OUTPUT SYSTEM, AND COMPUTER PROGRAM**

(30) Priority: 31.07.2020 JP 2020130533
(71) Applicant: Mitsui Chemicals, Inc., Tokyo 104-0028 (JP)
(72) Inventor: ASADA, Noriaki, Tokyo 105-7117 (JP); YOSHII, Kazuma, Tokyo 105-7117 (JP); MATSUMURA, Shoko, Sodegaura-shi, Chiba 299-0265 (JP)
(74) Representative: Epping - Hermann - Fischer
(86) International application number: PCT/JP2021/027402
(87) International publication number: WO 2022/024938

(57) **Abstract**

There is provided an image output device 10 that includes: a detection unit 101 that detects, as a start trigger for color change processing, acquisition of color change information that is to be used for the color change processing and that is unique to a user who is a target of the color change processing related to color change of visual information to be presented to the user; a color change processing unit 104 that performs, in response to detection of the start trigger by the detection unit 101, the color change processing based on the color change information; and a visual information output unit 105 that outputs, in a format corresponding to a situation of the user, the visual information after color change by the color change processing unit 104.

## Description

### Technical Field

The present disclosure relates to image output devices, image output methods, image output systems, computer programs.

### Background Art

A technique is disclosed in which color processing is disclosed on an image to be displayed on a display or the like in accordance with color vision that a person has. For example, Patent Literature 1 discloses a color processing program capable of performing color processing in accordance with a type of color vision and a level of color vision that a person has.

### PRIOR ART DOCUMENT

### Patent Literature

Patent Literature 1: International Patent Application Publication No. WO 2018/207675

### SUMMARY OF INVENTION

### Technical Problem

Patent Literature 1 describes that color processing can be performed in accordance with a type of color vision and a level of color vision, but does not describe at what timing color processing is performed on an image or how to display the image on which the color processing has been performed.

The disclosure has been made in view of the points, and an object of the disclosure is to provide an image output device, an image output method, an image output system, and a computer program that change color of visual information in response to generation of a start trigger and appropriately present the visual information whose color is changed.

### Solution to Problem

In order to achieve the object, an image output device according to the disclosure includes: a detection unit that detects a start trigger for color change processing including processing related to a color change of visual information to be presented to a user, a color change processing unit that performs, in response to detection of the start trigger by the detection unit, the color change processing based on color change information that is unique to a user who is a target of the color change processing and that is used for the color change processing, and a visual information output unit that outputs, in a format corresponding to a situation of the user, the visual information after color change by the color change processing unit.

In a case in which a plurality of persons including the user are detected to be present, the color change processing unit can perform the color change processing only with respect to visual information to be presented on a display device used by the user.

The image output device further includes an acquisition unit that acquires the color change information, and the detection unit detects, as the start trigger, acquisition of the color change information by the acquisition unit.

The acquisition unit can acquire the color change information from a device owned by the user.

The acquisition unit can acquire the color change information using information that has been input by the user.

The acquisition unit can acquire the color change information at a time point at which the user is detected to have approached within a predetermined distance of the visual information display device.

The visual information output unit can output the visual information while superimposing original color information on the visual information using text.

The visual information output unit can output original color information using audio.

The visual information output unit can output the visual information after color change to another display device connected to a display device for the visual information used by the user.

The color change processing unit can change the color change information based on feedback, from the user, indicating that the user has failed to distinguish between colors based on the visual information output by the visual information output unit.

The color change information can include a color change coefficient that determines a change amount of a color of the visual information and a type of color vision of the user.

In order to achieve the object, an image output method according to the disclosure is performed by a computer and includes detecting a start trigger for color change processing comprising processing related to a color change of visual information to be presented to a user, performing, in response to detection of the start trigger, the color change processing based on color change information that is unique to a user who is a target of the color change processing and that is used for the color change processing, and outputting, in a format corresponding to a situation of the user, the visual information after color change by the color change processing.

In order to achieve the object, an image output system according to the disclosure includes the image output device according to the disclosure; and a server that stores the color change information.

In order to achieve the object, a computer program of the disclosure causes a computer to perform a process including: detecting a start trigger for color change processing comprising processing related to a color change of visual information to be presented to a user, performing, in response to detection of the start trigger, the color change processing based on color change information that is unique to a user who is a target of the color change processing and that is used for the color change processing, and outputting, in a format corresponding to a situation of the user, the visual information after color change by the color change processing.

### Advantageous Effects of Invention

The disclosure makes it possible to provide an image output device, an image output method, an image output system, and a computer program that change color of visual information, using, as a start trigger, acquisition of information related to color change of the visual information to be presented to a user and that present the visual information whose color is changed in accordance with a situation of the user.

### BRIEF DESCRIPTION OF DRAWINGS

Fig. 1 is a diagram illustrating a schematic configuration of an image output system according to a first embodiment.
Fig. 2 is a block diagram illustrating a hardware configuration of the image output device according to the first embodiment.
Fig. 3 is a block diagram illustrating an example of a functional configuration of the image output device according to the first embodiment.
Fig. 4 is a flowchart illustrating a flow of an image output process by the image output device according to the first embodiment.
Fig. 5 is a block diagram illustrating an example of a functional configuration of an image output device according to a second embodiment.
Fig. 6 is a flowchart illustrating a flow of an image output process by the image output device according to the second embodiment.
Fig. 7 is a diagram illustrating a schematic configuration of an image output system according to a third embodiment.
Fig. 8 is a flowchart illustrating a flow of an image output process by an image output device according to the third embodiment.
Fig. 9 is a diagram illustrating a schematic configuration of an image output system according to a fourth embodiment.
Fig. 10 is a flowchart illustrating a flow of an image output process by an image output device according to the fourth embodiment.

### DESCRIPTION OF EMBODIMENTS

Hereinafter, an example of embodiments of the disclosure will be described with reference to the drawings. In each of the drawings, the same or equivalent components and portions are denoted by the same reference signs. In addition, dimensional ratios in the drawings are exaggerated for convenience of description, and may be different from actual ratios.

### (First Embodiment)

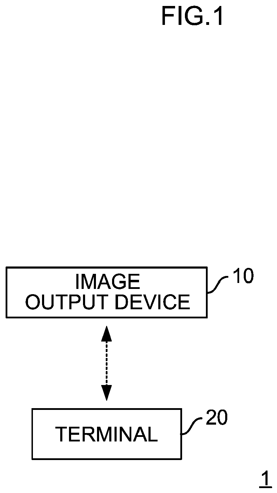

Fig. 1 is a diagram illustrating a schematic configuration of an image output system according to a first embodiment. An image output system 1 illustrated in Fig. 1 includes an image output device 10 and a terminal 20.

The image output device 10 is a device that outputs an image, which is an example of visual information, and is, for example, a display that displays an image in color, an electronic device or an automatic teller machine including a display, or a printer that prints an image in color. The visual information output from the image output device 10 may be generated by the image output device 10 or may be acquired from a device different from the image output device 10. The devices different from the image output device 10 include not only the terminal 20 but also a device not shown in the diagram.

The retina of the human eye has the following two types of photoreceptor cells: rods that work only in a dark place; and cones that work only in a bright place. The cones have three types: L (red), M (green), and S (blue), and the wavelengths of light mainly felt (spectral sensitivity) are different. Human color vision can be classified by, for example, the color vision models of Guth. A person having all the three types of cones can correctly recognize color. Such a person is classified into C-type color vision on the basis of the color vision models of Guth.

However, some people have a type of color vision with which it is difficult to distinguish between colors. Some people have no L cones that mainly feel red light, or some people have L cones whose spectral sensitivity is shifted and is similar to the spectral sensitivity of M cones. Such people are classified into P-type color vision on the basis of the color vision models of Guth. In addition, some people have no M cones that mainly feel green light, or some people have M cones whose spectral sensitivity is shifted and is similar to the spectral sensitivity of L cones. Such people are classified into D-type color vision on the basis of the color vision models of Guth. People classified into P-type color vision and D-type color vision have difficulty distinguishing between red and green. Therefore, in a case in which people classified into P-type color vision and D-type color vision watch a video in which a team wearing red uniforms and a team wearing green uniforms are playing a soccer game, it is difficult to distinguish which players are in which team. Furthermore, people having no S cones are classified into T-type color vision on the basis of the color vision models of Guth. T-type color vision is color vision with which it is impossible to distinguish blue.

In addition, some people used to be able to distinguish between colors, but become to have difficulty distinguishing between colors later in life due to aging, eye disease, or the like. In the case of people who become to have trouble distinguishing between colors, for example, it is difficult to see blue in a dark place or to distinguish between white and yellow in a bright place.

The image output device 10 is configured to perform color change processing on visual information so that a person whose color appearance is different from that of a person having C-type color vision can recognize a difference in color in the same manner as a person having C-type color vision, and is configured to output the visual information whose color is changed.

When outputting an image, the image output device 10 outputs an image whose color is changed in accordance with a state of color vision of a user who will view the image to be output. When the color is changed, a technique disclosed in WO 2018/207675 A is used, for example. The image output device 10 functions as an example of the image output device of the disclosure.

The color change by the image output device 10 uses, as a start trigger for changing color, the fact that the color change information for changing the color of the image to be output is acquired. The color change information for changing the color of the image is information used at the time of color change processing, and includes, for example, a coefficient representing color vision strength of a user and a type of color vision that are disclosed in WO 2018/207675 A. The image output device 10 detects a user who will view the image to be output by the image output device 10, and in a case in which there is color change information associated with the user, the acquisition of the color change information is used as a start trigger for color change. The color change information is generated on the basis of an examination performed on the user in advance. The examination on the user may be performed, for example, by an examination mode that is first performed by the image output device 10 after the user purchases the image output device 10, or may be performed at the time of visiting a medical institution. A method for generating the color change information is disclosed in WO 2018/207675 A, for example. WO 2018/207675 A discloses a technique in which a coefficient representing the color vision strength of a user is determined by presenting a reference color and a test color to an examinee and by determining whether or not the number of times the test color was selected is more than or equal to a predetermined value.

The terminal 20 is a terminal carried by the user who views an image that is output by the image output device 10, and examples of the terminal 20 include a smartphone, a tablet-type terminal, a wristwatch-type terminal, an eyeglass-type terminal, a goggle-type terminal, and an IC card. The terminal 20 may be able to wireless communicate directly with the image output device 10 by Bluetooth (registered trademark), Wi-Fi (registered trademark), or the like. The terminal 20 may be able to perform proximity non-contact communication with the image output device 10 by near field communication (NFC). The image output device 10 can acquire, from the terminal 20, information about the user who is the target of image output, by direct wireless communication between the image output device 10 and the terminal 20. The information about the user may be, for example, information for uniquely identifying the user. The image output device 10 can identify the user who is the target of image output, by wireless communication with the terminal 20.

The image output device 10 according to the first embodiment identifies the user who will view an image to be output by the image output device 10, and in a case in which there is color change information associated with the identified user, the image output device 10 changes the color of the image to be output, using, as a start trigger, the acquisition of the color change information. By changing the color of the output image, using, as a start trigger, the acquisition of the color change information, the image output device 10 can change the color of the image only in a case in which the user associated with the color change information views the image.

Note that, when identifying a user, the image output device 10 may identify the user without relying on information sent from the terminal 20. For example, the image output device 10 may identify a user who is a target of image output by analyzing an image captured by a camera provided to capture an image in front of the screen and recognizing a face in the image.

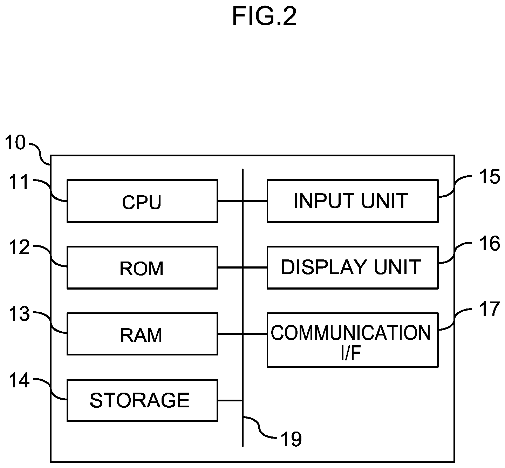

Fig. 2 is a block diagram illustrating a hardware configuration of the image output device 10.

As illustrated in Fig. 2, the image output device 10 includes a central processing unit (CPU) 11, a read only memory (ROM) 12, a random access memory (RAM) 13, a storage 14, an input unit 15, a display unit 16, and a communication interface (I/F) 17. Respective ones of the components are communicably connected to each other through a bus 19.

The CPU 11 is a central processing unit, and executes various programs and controls each unit. Specifically, the CPU 11 reads out a program from the ROM 12 or the storage 14, and executes the program, using the RAM 13 as a workspace. The CPU 11 performs control of each of the components and various types of arithmetic processing according to a program recorded in the ROM 12 or the storage 14. In the present embodiment, the ROM 12 or the storage 14 stores an image output program for changing color of an image to be output and outputting the image whose color is changed.

The ROM 12 stores various programs and various data. The RAM 13 temporarily stores a program or data as a workspace. The storage 14 includes a storage device such as a hard disk drive (HDD), a solid state drive (SSD), or a flash memory, and stores various programs including an operating system and various data.

The input unit 15 includes a pointing device such as a mouse and a keyboard, and is used to perform various inputs.

The display unit 16 is, for example, a liquid crystal display, and displays various types of information. The display unit 16 may function as the input unit 15 by employing a touch panel system.

The communication interface 17 is an interface for communicating with another device such as the terminal 20, and employs, for example, a standard such as Ethernet (registered trademark), FDDI, and Wi-Fi (registered trademark).

When executing the image output program, the image output device 10 implements various functions by using the hardware resources. A functional configuration implemented by the image output device 10 will be described.

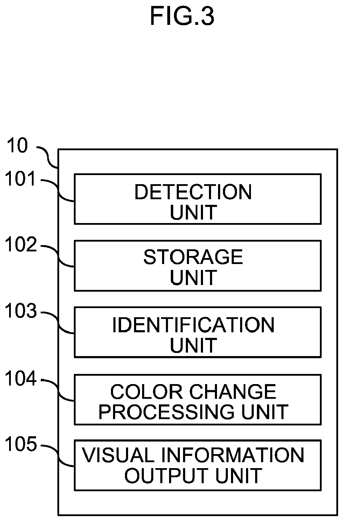

Fig. 3 is a block diagram illustrating an example of a functional configuration of the image output device 10.

As illustrated in Fig. 3, the image output device 10 includes, as functional components, a detection unit 101, a storage unit 102, an identification unit 103, a color change processing unit 104, and a visual information output unit 105. Each functional component is realized by the CPU 11 reading out and executing the image output program stored in the ROM 12 or the storage 14.

The detection unit 101 detects a start trigger for the color change processing by the color change processing unit 104. Specifically, the detection unit 101 detects, as a start trigger for the color change processing, acquisition of color change information that is used for such color change processing and is unique to a user who is the target of the color change processing, which is processing related to color change of the visual information to be presented to the user by the visual information output unit 105. There is no limitation to how to acquire the visual information to be subjected to the color change processing. The visual information to be subjected to the color change processing may be generated by the image output device 10 or may be acquired by the image output device 10 from a device different from the image output device 10.

For example, the identification unit 103 described later identifies the user by acquiring the information about the user of the terminal 20, and in a case in which the color change information associated with the identified user is stored in the storage unit 102, the detection unit 101 acquires the color change information from the storage unit 102. Then, the detection unit 101 uses, as a start trigger for the color change processing, the acquisition of the color change information from the storage unit 102.

The storage unit 102 stores various types of information regarding operation of the image output device 10. The storage unit 102 stores, for example, color change information for changing color of visual information. The color change information is determined for each user for whom the color of visual information needs to be changed. There is no color change information of a user for whom color of visual information does not need to be changed, for example, a user having C-type color vision.

The identification unit 103 identifies a user who will view visual information to be output by the visual information output unit 105. For example, the identification unit 103 identifies the user from the information acquired from the terminal 20. Alternatively, the identification unit 103 may identify the user from information input from the user to the image output device 10. For example, the visual information output unit 105 may present a user interface for selecting a user who will view the visual information, and the identification unit 103 may identify the user on the basis of a result of input to the user interface. For example, the identification may be performed as follows. The terminal 20 outputs a two-dimensional code, and the identification unit 103 reads the two-dimensional code, whereby the identification unit 103 identifies the user who will view the visual information to be output by the visual information output unit 105. For example, the identification unit 103 may identify the user who will view the visual information to be output by the visual information output unit 105, by fingerprint authentication, voiceprint authentication, iris authentication, or other biometric authentication. For example, the identification unit 103 may use a learned model generated by machine learning, at the time of identifying the user. The learned model may be stored in the storage unit 102 or may be stored in a device different from the image output device 10.

The color change processing unit 104 executes the color change processing of visual information in response to detection of a start trigger by the detection unit 101. The color change processing unit 104 performs the color change processing by using the color change information read out from the storage unit 102, for example, by using the technique disclosed in WO 2018/207675 A. By using the technique disclosed in WO 2018/207675 A, the color change processing unit 104 can appropriately change the color of the visual information to be presented to the user by using, as the color change information, the information about the color vision strength and the type of color vision of the user. In the following description, the coefficient representing the color vision strength of the user is also referred to as "k value". The k value is a coefficient defined by a value in a range of from 0 to 1. A person having C-type color vision has a k value of 0, and the larger the k value, the wider the range in which color is recognized to be the same.

For example, assuming that an image that is the target of color change is first color information in a first color space. The first color space is assumed to be, for example, the RGB color space. The color change processing unit 104 first converts the first color information into second color information in a second color space in accordance with the color vision strength and the type of color vision of the user. The second color space is, for example, the ATD color space. Then, the color change processing unit 104 converts the second color information into third color information in the first color space. By changing the color of the image in this manner, the color change processing unit 104 can generate an image in color suitable for the color vision strength and the type of color vision of the user.

The color change processing unit 104 may change the color of the entire visual information or may change the color of a part of the visual information. In the case of changing the color of a part of the visual information, the color change processing unit 104 may change the color of a main part of the visual information. The main part of the visual information can change depending on the content of the visual information. For example, in a case in which the visual information is a game screen, the color change processing unit 104 may change color only for the portion of the image of a character that needs to be distinguished.

The visual information output unit 105 outputs visual information. The output of the visual information may be performed on a display or may be performed by printing the visual information on a medium such as paper. In a case in which the color of the visual information has been changed by the color change processing unit 104, the visual information output unit 105 outputs the visual information whose color has been changed.

When outputting the visual information, the visual information output unit 105 may superimpose information about the original color before change on the visual information by using a character. The visual information output unit 105 outputs, by using a character, the information about the original color before change while superimposing the information about original color on the visual information, whereby the user can recognize what kind of color the original color is. When outputting the visual information, the visual information output unit 105 may output the information about the original color before change by using sound. The audio about the color information may be output from the terminal 20 carried by the user, or may be output from a speaker communicably connected to the image output device 10.

Furthermore, when outputting the visual information, the visual information output unit 105 outputs the visual information in a form in accordance with the situation of the user who will view the visual information. A specific example of the output of the visual information in a form in accordance with the situation of the user who will view the visual information will be described in detail later. For example, in a state in which only the user for whom color needs to be changed is near the image output device 10, the visual information output unit 105 outputs the visual information whose color is changed. On the other hand, in a state in which a user for whom color does not need to be changed is also near the image output device 10, the visual information output unit 105 outputs the visual information whose color is changed only to the device that the user for whom color needs to be changed uses to view the visual information.

The color change processing unit 104 may acquire feedback indicating whether or not the user has recognized the color on the basis of the visual information having been output by the visual information output unit 105. In a case in which the user could not distinguish between colors on the basis of the visual information having been output by the visual information output unit 105, the color change processing unit 104 may change the color change information so that the user can distinguish between colors, and may perform the color change processing on the basis of the changed color change information.

Since the image output device 10 according to the first embodiment has the functional configuration illustrated in Fig. 3, the image output device 10 can perform color change processing of visual information on the basis of detection of the start trigger for the color change processing, and can output the visual information in the color in accordance with the user in a form in accordance with the situation of the user who will view the visual information.

Next, an action of the image output device 10 will be described.

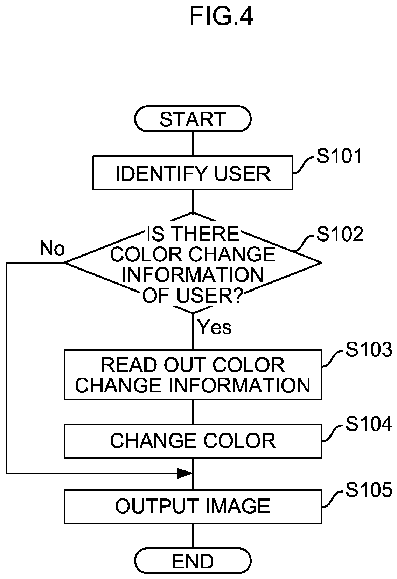

Fig. 4 is a flowchart illustrating a flow of the image output process by the image output device 10 according to the first embodiment. The CPU 11 reads out an image output program from the ROM 12 or the storage 14, develops the image output program in the RAM 13, and executes the image output program, whereby the image output process is performed.

First, the CPU 11 identifies a user who is the target of image output (step S101). The CPU 11 may identify the user who is the target of image output by using information acquired from the terminal 20, or may identify the user who is the target of image output by using information input by the user.

After the user who is the target of image output is identified, the CPU 11 determines whether or not color change information, for example, the k value and the type of color vision of the user identified in step S101 is in the image output device 10 (step S102).

As a result of the determination in step S102, in a case in which the color change information of the user identified in step S101 is in the image output device 10 (step S102: Yes), the CPU 11 reads out the color change information of the user identified in step S101 (step S103). Subsequent to step S103, the CPU 11 changes the color of the image to be output as the visual information by using the read-out color change information, using, as a start trigger, the fact that the CPU has read out the color change information (step S104). The CPU 11 performs color change processing that uses the color change information by using, for example, the technique disclosed in WO 2018/207675 A.

The CPU 11 outputs the image whose color has been changed in step S104 (step S105). As a result of the determination in step S102, in a case in which the color change information of the user identified in step S101 is not in the image output device 10 (step S102: No), the CPU 11 outputs the image without changing color (step S105). When outputting the image, the CPU 11 outputs the visual information in a form in accordance with the situation of the user who will view the visual information.

By performing the process illustrated in Fig. 4, the image output device 10 according to the first embodiment can perform color change processing of visual information so that a person who sees color in a different way from the way a person having C-type color vision sees color can recognize the difference in color in the same manner as a person having C-type color vision recognizes the difference in color. In a case in which people having P-type color vision and D-type color vision watch a video in which a team wearing red uniforms and a team wearing green uniforms are playing a soccer game, the image output device 10 makes it possible to easily distinguish which players are in which team

By performing the process illustrated in Fig. 4, the image output device 10 according to the first embodiment can perform color change processing of visual information on the basis of detection of the start trigger for the color change processing. The start trigger in the first embodiment is reading out of the color change information stored in the image output device 10. Then, the image output device 10 according to the first embodiment can output the visual information in the color in according with the user in a form in accordance with the situation of the user who will view the visual information.

### (Second Embodiment)

In the first embodiment, a description has been given on the case in which the color change information is inside the image output device 10. In a second embodiment, a description will be given on a case in which the color change information is not in the image output device 10 and the image output device 10 acquires the color change information from the terminal 20.

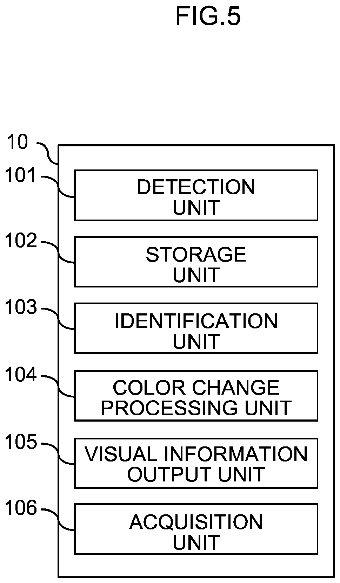

Fig. 5 is a block diagram illustrating an example of a functional configuration of the image output device 10.

As illustrated in Fig. 5, the image output device 10 includes, as functional components, a detection unit 101, a storage unit 102, an identification unit 103, a color change processing unit 104, a visual information output unit 105, and an acquisition unit 106. Each functional component is realized by the CPU 11 reading out and executing the image output program stored in the ROM 12 or the storage 14.

Here, a configuration of the acquisition unit 106 added to the first embodiment will be described. The acquisition unit 106 acquires color change information from terminal 20. Since the acquisition unit 106 acquires the color change information, the color change processing unit 104 can perform color change processing using the color change information.

After performing the color change processing using the color change information acquired by the acquisition unit 106, the color change processing unit 104 may store the color change information acquired by the acquisition unit 106 in the storage unit 102 or may discard the color change information instead of storing the color change information.

Next, an action of the image output device 10 will be described.

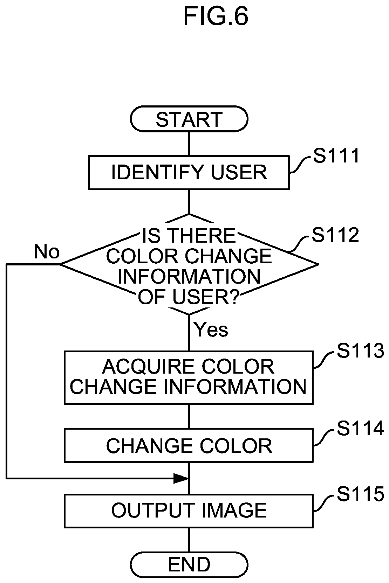

Fig. 6 is a flowchart illustrating a flow of an image output process by the image output device 10 according to the second embodiment. The CPU 11 reads out an image output program from the ROM 12 or the storage 14, develops the image output program in the RAM 13, and executes the image output program, whereby the image output process is performed.

First, the CPU 11 identifies a user who is the target of image output (step S111). The CPU 11 may identify the user who is the target of image output by using information acquired from the terminal 20, or may identify the user who is the target of image output by using information input by the user.

After the user who is the target of image output is identified, the CPU 11 determines whether or not the color change information, for example, the k value and the type of color vision of the user identified in step S111 is in the terminal 20 (step S112).

As a result of the determination in step S112, in a case in which the color change information of the user identified in step S111 is in the terminal 20 (step S112: Yes), the CPU 11 acquires the color change information of the user identified in step S 111 from the terminal 20 (step S113). Subsequent to step S113, the CPU 11 changes the color of the image to be output as the visual information by using the read-out color change information, using, as a start trigger, the fact that the CPU 11 acquired the color change information from the terminal 20 (step S114). The CPU 11 performs the color change processing by using, for example, the technique disclosed in WO 2018/207675 A.

The CPU 11 outputs the image whose color has been changed in step S 114 (step S115). As a result of the determination in step S112, in a case in which the color change information of the user identified in step S111 is not in the terminal 20 (step S112: No), the CPU 11 outputs the image without changing color (step S115). When outputting the image, the CPU 11 outputs the visual information in a form in accordance with the situation of the user who will view the visual information.

By performing the process illustrated in Fig. 6, the image output device 10 according to the second embodiment can perform color change processing of visual information on the basis of detection of the start trigger for the color change processing. The start trigger in the second embodiment is acquisition of color change information from the terminal 20. The image output device 10 according to the second embodiment can output the visual information in the color in accordance with the user in a form in accordance with the situation of the user who will view the visual information.

### (Third Embodiment)

In the second embodiment, a description has been given on the case in which the image output device 10 acquires the color change information from the terminal 20. In a third embodiment, a description will be given on a case in which the color change information is not in the image output device 10 and the image output device 10 acquires the color change information from a device other than the terminal 20.

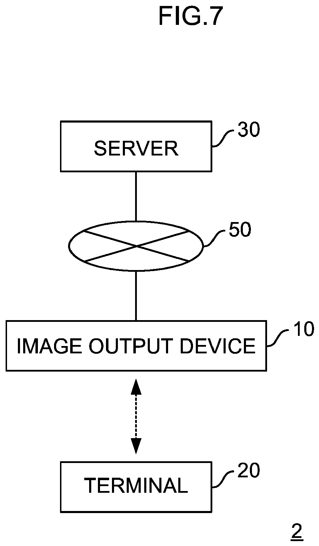

Fig. 7 is a diagram illustrating a schematic configuration of an image output system according to the third embodiment. An image output system 2 illustrated in Fig. 7 includes an image output device 10, a terminal 20, and a server 30. Here, a description will be given on a server 30 not illustrated in the image output system 1 illustrated in Fig. 1.

The server 30 is a server that stores color change information. The server 30 stores the color change information to be used for color change processing in the image output device 10, in association with a user for whom color change processing is necessary. Then, the server 30 provides the color change information to the image output device 10 in response to a request from the image output device 10. The server 30 is communicably connected to the image output device 10 through the Internet, an intranet, or another network 50.

The server 30 can be installed, for example, in a medical institution where an examination was performed with respect to a user's vision, or in a local government. Furthermore, the server 30 may be a cloud server accessible from a local government or a medical institution where an examination was performed with respect to a user's vision. The server 30 holds color change information generated on the basis of a result of an examination of a user's vision, whereby the server 30 can provide the color change information to the image output device 10 in response to a request from the image output device 10 even in a case in which the color change information is not held in the image output device 10.

In the third embodiment, the image output device 10 can be a digital signage installed in a station, a department store, a public facility, or the like. The image output device 10 installed in such a place does not always output visual information, but may start outputting visual information in a case in which a person is detected to be in proximity. In the present embodiment, the image output device 10 detects that a person has approached within a predetermined distance from the image output device 10, and the image output device 10 identifies, in response to the detection, the user who will view visual information. Then, in a case in which there is the color change information associated with the identified user, the image output device 10 acquires the color change information by the acquisition unit 106, using, as a start trigger, the fact that the color change information has been confirmed to exist, and the image output device 10 performs color change processing.

The image output device 10 performs the color change processing that changes the color of the visual information to be presented to the user, by using the color change information provided from the server 30. Note that the color change processing of the visual information may be performed by the server 30 instead of the image output device 10. In a case in which the server 30 performs the color change processing, the image output device 10 acquires the visual information whose color is changed by the server 30, and then presents the visual information.

The functional configuration of the image output device 10 illustrated in Fig. 7 is the same as the functional configuration illustrated in Fig. 5. Next, an action of the image output device 10 will be described.

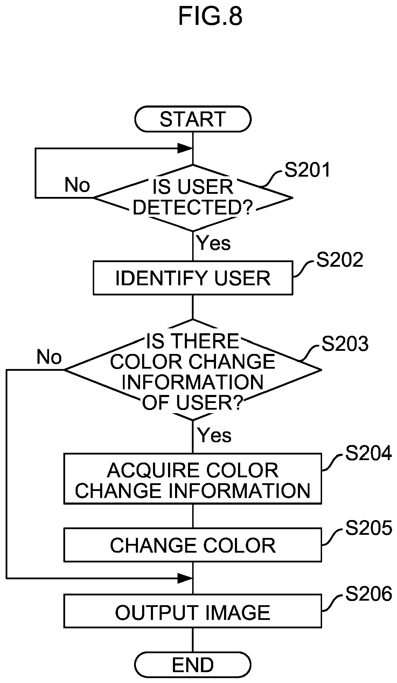

Fig. 8 is a flowchart illustrating a flow of an image output process by the image output device 10 according to the third embodiment. The CPU 11 reads out an image output program from the ROM 12 or the storage 14, develops the image output program in the RAM 13, and executes the image output program, whereby the image output process is performed.

First, the CPU 11 determines whether or not a user around the image output device 10 is detected (step S201). The user may be detected by, for example, a human sensor using infrared light or another sensor. The CPU 11 repeats the processing of step S201 until a user around the image output device 10 is detected. Then, in a case in which a user around the image output device 10 is detected (step S201: Yes), the CPU 11 identifies the user who is the target of image output (step S202). The CPU 11 may identify the user who is the target of image output by using information acquired from the terminal 20, or may identify the user who is the target of image output by using information input by the user.

In a case in which the user who is the target of image output is identified, the CPU 11 determines whether or not the color change information, for example, the k value and the type of color vision of the user identified in step S202 is in the server 30 (step S203).

As a result of the determination in step S203, in a case in which the color change information of the user identified in step S202 is in the server 30 (step S203: Yes), the CPU 11 acquires the color change information of the user identified in step S202 from the server 30 (step S204). Subsequent to step S204, the CPU 11 changes the color of the image to be output as the visual information by using the read-out color change information, using, as a start trigger, the fact that the CPU 11 acquired the color change information from the terminal 20 (step S205). The CPU 11 performs the color change processing by using, for example, the technique disclosed in WO 2018/207675 A.

The CPU 11 outputs the image whose color has been changed in step S205 (step S206). As a result of the determination in step S203, in a case in which the color change information of the user identified in step S202 is not in the server 30 (step S203: No), the CPU 11 outputs the image without changing color (step S206). When outputting the image, the CPU 11 outputs the visual information in a form in accordance with the situation of the user who will view the visual information.

By performing the process illustrated in Fig. 8, the image output device 10 according to the third embodiment can perform color change processing of visual information on the basis of detection of the start trigger for the color change processing. The start trigger in the third embodiment is acquisition of the color change information from the server 30. Then, the image output device 10 according to the third embodiment can output the visual information in the color in accordance with the user in a form in accordance with the situation of the user who will view the visual information.

### (Fourth Embodiment)

In the third embodiment, a description has been given on the case in which the image output device 10 acquires the color change information from the server 30. In the fourth embodiment, a description will be given on a case in which a plurality of users view visual information whose color is changed by the image output device 10.

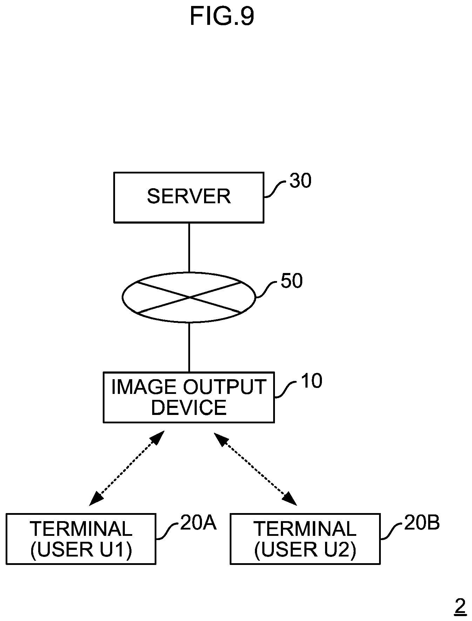

Fig. 9 is a diagram illustrating a schematic configuration of an image output system according to the fourth embodiment. An image output system 2 illustrated in Fig. 9 includes an image output device 10, terminals 20A and 20B, and a server 30. Assuming that the terminal 20A is a terminal carried by a user (referred to as a "user U1") who needs visual information whose color is changed, and the terminal 20B is a terminal carried by a user (referred to as a "user U2") who does not need visual information whose color is changed.

As illustrated in Fig. 9, in a case in which a plurality of users view visual information output from the image output device 10, it is desirable to present appropriate pieces of visual information in accordance with the users. This is because, in a case in which the image output device 10 outputs visual information whose color is changed, the visual information gives a feeling of strangeness to a user who does not need visual information whose color is changed.

The image output device 10 according to the fourth embodiment presents visual information whose color is changed only to a user who needs visual information whose color is changed.

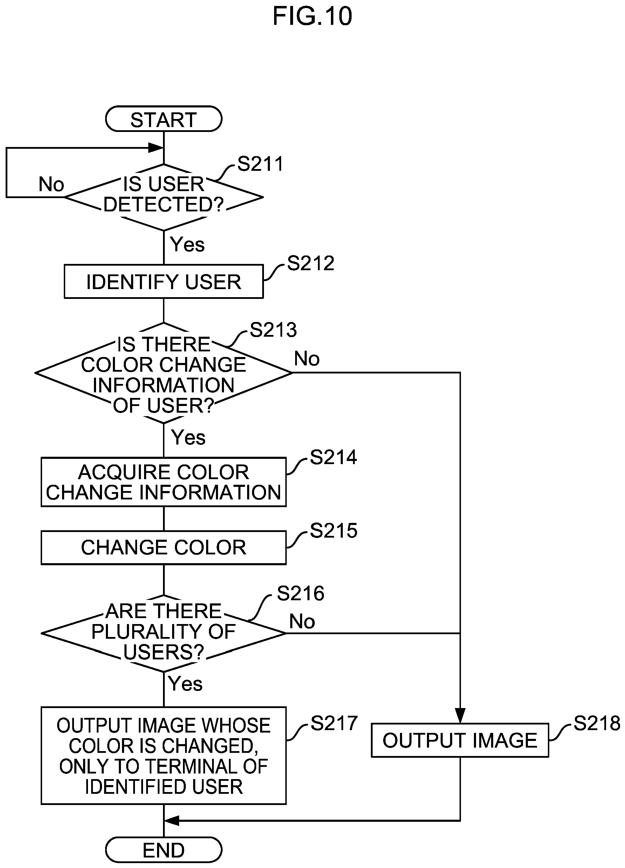

Fig. 10 is a flowchart illustrating a flow of an image output process by the image output device 10 according to the fourth embodiment. The CPU 11 reads out an image output program from the ROM 12 or the storage 14, develops the image output program in the RAM 13, and executes the image output program, whereby the image output process is performed.

First, the CPU 11 determines whether or not a user around the image output device 10 is detected (step S211). The user may be detected by, for example, a human sensor using infrared light or another sensor. The CPU 11 repeats the processing of step S211 until a user around the image output device 10 is detected. Then, in a case in which a user around the image output device 10 is detected (step S211: Yes), the CPU 11 identifies the user who is the target of image output (step S212). The CPU 11 may identify the user who is the target of image output by using information acquired from the terminal 20, or may identify the user who is the target of image output by using information input by the user.

After the user who is the target of image output is identified, the CPU 11 determines whether or not the color change information, for example, the k value and the type of color vision of the user identified in step S212 is in the server 30 (step S213).

As a result of the determination in step S213, in a case in which the color change information of the user identified in step S212 is in the server 30 (step S213: Yes), the CPU 11 acquires the color change information of the user identified in step S212 from the server 30 (step S214). Subsequent to step S214, the CPU 11 changes the color of the image to be output as the visual information by using the read-out color change information, using, as a start trigger, the fact that the CPU 11 acquired the color change information from the server 30 (step S215). The CPU 11 performs the color change processing by using, for example, the technique disclosed in WO 2018/207675 A.

In a case in which the color of the image has been changed in step S215, the CPU 11 determines whether there is a plurality of users who view the visual information (step S216). As a result of the determination in step S216, in a case in which it is determined that there is a plurality of users who view the visual information (step S216: Yes), the CPU 11 outputs the image whose color is changed only to the terminal 20 of the user identified in step S212, that is, the terminal 20A (step S217). The CPU 11 outputs the image whose color is not changed to the terminal 20 of the user other than the user specified in step S212, that is, the terminal 20B of the user for whom color does not need to be changed (step S218).

As a result of the determination in step S213, in a case in which the color change information of the user identified in step S212 is not in the server 30 (step S213: No), the CPU 11 outputs the image without changing color (step S218).

By performing the process illustrated in Fig. 10, the image output device 10 according to the fourth embodiment can perform color change processing of visual information on the basis of detection of the start trigger for the color change processing. The start trigger in the fourth embodiment is acquisition of the color change information from the server 30. The image output device 10 according to the fourth embodiment can output the visual information in the color in accordance with the user, only to the user U1 who needs the color of the visual information to be changed.

In the fourth embodiment, the image output device 10 acquires the color change information from the server 30, but the disclosure is not limited to such an example. In a case in which the image output device 10 presents the visual information whose color is changed only to the user U1 who needs the visual information whose color is changed, the image output device 10 may already hold the color change information, or may acquire the color change information from the terminal 20.

### (Advantageous Effects)

Depending on the type of color vision and the level of color vision that a user has, in a case in which the user views a screen of a device owned by the user, some colors cannot be recognized in an image generated for a person having C-type color vision. For example, characters or enemies and allies are distinguished and expressed by colors in some cases; however, depending on the type of color vision and the level of color vision that the user has, it is impossible to distinguish between characters or enemies and allies that are made for a person having C-type color vision. For example, in the case of learning using an electronic textbook, depending on the type of color vision and the level of color vision that a user has, it is difficult to distinguish the followings created for a person having C-type color vision: charts differentiated by colors or colors of paintings; characters (for example, display of the number of writing strokes, of a Chinese character, indicated by colors); portions of a stained specimen; presence or absence of a reaction of a litmus test paper; titles on a map; color arrangement, and the like. For example, in the case of a car navigation system, titles on a map or the like cannot be recognized depending on the type of color vision and the level of color vision that a user has.

For example, in the case of viewing display of a switch, a timer, a charge state, and the like of a home appliance, a state of the switch, a state of the timer, or a state of charge cannot be recognized depending on the type of color vision and the level of color vision that a user has. For example, in the case of viewing an instrument panel of an automobile or the like, it is difficult to recognize a state of the automobile displayed on the instrument panel, depending on the type of color vision and the level of color vision that a user has.

The image output device 10 according to each of the embodiments outputs visual information after changing the color of the visual information in accordance with the type of color vision and the level of color vision that a user has, on the basis of detection of the start trigger for the color change processing. Since the image output device 10 outputs the visual information after changing the color of the visual information in accordance with the type of color vision and the level of color vision that the user has, it is possible to design a screen by using such a number of colors that are tailored to the degree of color vision that the user has, whereby it is possible to maximize the amount of information transmitted to the user. In addition, since the image output device 10 outputs the visual information after changing the color of the visual information, the number of color options is increased, and it is possible to improve design, amusement, convenience, and safety.

Depending on the type of color vision and the level of color vision that a user has, there is a case in which information cannot be distinguished by color on a screen that is a public object but is temporarily used only by a user him or herself. For example, in the case of an ATM, an automatic check-in machine, a ticketing machine, an in-flight display, an advertisement, a guide plate, or the like, there is a case in which it is impossible to distinguish, by color, visual information created for a person having C-type color vision.

An image output device 10 installed as a public object changes the color of visual information by using color change information previously stored in the image output device 10, in the terminal 20, or in the server 30. Since the image output device 10 outputs the visual information after changing the color of the visual information, it is possible to obtain a necessary operation or information without allowing surrounding people to know that the type of color vision and the level of color vision are different from those of a person having C-type color vision, although the visual information is a public object in a public place.

In a case in which a plurality of persons having different types of color vision and different levels of color vision (where a person having C-type color vision may be included) view one screen or show screens to each other, a person having a different type of color vision and a different level of color vision from those of a person having C-type color vision cannot distinguish the color of the screen and cannot have the same feeling as a person having C-type color vision. For example, in a case in which a TV program displaying a screen using color is viewed by a plurality of persons, a person whose type of color vision and level of color vision are different from those of C-type color vision cannot recognize the color that a person having C-type color vision can recognize, and cannot share the content or have the same feeling on the content. In addition, there is a possibility that it becomes known that a person is not a person having C-type color vision, when the person is asked the name of color.

When having detected a plurality of users viewing visual information, the image output device 10 outputs the visual information whose color is changed only to the terminal 20A of a user U1 having color change information, or outputs the visual information on which information about original color is superimposed by using a character. Since the image output device 10 outputs the visual information in a different form only to the terminal 20 of the user having color change information, the user having color change information can share the information with the other person and can have the same feeling without allowing the other person to know that the user cannot discriminate colors. In a case in which the terminal 20 is an eyeglass-type terminal or a goggle-type terminal, the image output device 10 outputs visual information whose color is changed to the terminal 20A of the user U1, and outputs visual information whose color is not been changed to the terminal 20B of a user U2. By outputting the visual information in this manner, the user U1 can share the visual information with the user U2 and can have the same feeling.

In a case in which a user has to look through, in an online meeting or the like, electronic data of presentation materials created by another person, the user sometimes cannot understand the color that a creator has used, depending on the type of color vision and the level of color vision that the user has. In addition, in a case in which the user is in such a situation that the user cannot easily ask the creator what color is used, for example, in a case in which the creator of the presentation materials is an external customer or the like, the user sometimes cannot understand the intention of creation of the presentation materials, depending on the type of color vision and the level of color vision that the user has.

In a case in which, there is the color change information of the user when the user has logged in to an online meeting, the image output device 10 performs color change processing of visual information using the color change information of the user. By executing the color change processing of the visual information when the user has logging in to the online meeting, the image output device 10 can change the color of the electronic data of the presentation materials created by another person and can present the electronic data to the user.

In each of the embodiments, the color change processing unit 104 is included in the image output device 10, but the disclosure is not limited to such an example. The color change processing of the visual information may be performed by a device different from the image output device 10, for example, the server 30, or may be performed by another device that is different from the server 30 and is connected to the network 50.

The image output process performed by the CPU reading in software (program) in each of the embodiments may be performed by various processors other than the CPU. Examples of the processor in this case include the followings: a programmable logic device (PLD) such as a field-programmable gate array (FPGA) or the like in which a circuit configuration can be changed after manufacturing; and a dedicated electric circuit such as an application specific integrated circuit (ASIC) or the like, which is a processor having a circuit configuration exclusively designed to perform specific processing. The image output process may be performed by one of these various processors, or may be performed by any combination of two or more processors of the same type or different types (for example, a plurality of FPGAs, and any combination of a CPU and an FPGA). More specifically, the hardware structure of these various processors is an electric circuit in which circuit elements such as semiconductor elements are combined.

Each of the embodiments has described the aspect in which the program of the image output process is stored (installed) in advance in the ROM or the storage, but the present invention is not limited thereto. The program may be provided in a form of being recorded in a non-transitory recording medium such as a compact disk read only memory (CD-ROM), a digital versatile disk read only memory (DVD-ROM), or a universal serial bus (USB) memory. The program may be downloaded from an external device through a network.

### Reference Signs List

- 1, 2: Image output system
- 10: Image output device
- 20: Terminal
- 30: Server
- 50: Network

## Claims

1. An image output device comprising:
a detection unit that detects a start trigger for color change processing comprising processing related to a color change of visual information to be presented to a user;
a color change processing unit that performs, in response to detection of the start trigger by the detection unit, the color change processing based on color change information that is unique to a user who is a target of the color change processing and that is used for the color change processing; and
a visual information output unit that outputs, in a format corresponding to a situation of the user, the visual information after color change by the color change processing unit.

2. The image output device according to claim 1, wherein, in a case in which a plurality of persons including the user are detected to be present, the color change processing unit performs the color change processing only with respect to visual information to be presented on a display device used by the user.

3. The image output device according to claim 1 or 2, further comprising an acquisition unit that acquires the color change information,
wherein the detection unit detects, as the start trigger, acquisition of the color change information by the acquisition unit.

4. The image output device according to claim 3, wherein the acquisition unit acquires the color change information from a device owned by the user.

5. The image output device according to claim 3, wherein the acquisition unit acquires the color change information using information that has been input by the user.

6. The image output device according to claim 3, wherein the acquisition unit acquires the color change information at a time point at which the user is detected to have approached within a predetermined distance of the visual information display device.

7. The image output device according to claim 1, wherein the visual information output unit outputs the visual information while superimposing original color information on the visual information using text.

8. The image output device according to claim 1, wherein the visual information output unit outputs original color information using audio.

9. The image output device according to claim 1, wherein the visual information output unit also outputs the visual information after color change to another display device connected to a display device for the visual information used by the user.

10. The image output device according to any one of claims 1 to 9, wherein the color change processing unit changes the color change information based on feedback, from the user, indicating that the user has failed to distinguish between colors based on the visual information output by the visual information output unit.

11. The image output device according to any one of claims 1 to 10, wherein the color change information includes a color change coefficient that determines a change amount of a color of the visual information and a type of color vision of the user.

12. An image output method performed by a computer, the method comprising:
detecting a start trigger for color change processing comprising processing related to a color change of visual information to be presented to a user;
performing, in response to detection of the start trigger, the color change processing based on color change information that is unique to a user who is a target of the color change processing and that is used for the color change processing; and
outputting, in a format corresponding to a situation of the user, the visual information after color change by the color change processing.

13. An image output system comprising:
the image output device according to any one of claims 1 to 11; and
a server that stores the color change information.

14. A computer program executable by a computer to perform processing, the processing comprising:
detecting a start trigger for color change processing comprising processing related to a color change of visual information to be presented to a user;
performing, in response to detection of the start trigger, the color change processing based on color change information that is unique to a user who is a target of the color change processing and that is used for the color change processing; and
outputting, in a format corresponding to a situation of the user, the visual information after color change by the color change processing.
